(19) Europäisches Patentamt / European Patent Office / Office européen des brevets

(11) **EP 2 308 943 A2**

(12) **EUROPEAN PATENT APPLICATION**

(43) Date of publication:
**13.04.2011 Bulletin 2011/15**

(51) Int Cl.:
***C09K 5/06*** (2006.01)

(21) Application number: **10012761.2**

(22) Date of filing: **07.04.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **08.04.2004 NL 1025910**

(62) Document number(s) of the earlier application(s) in accordance with Art. 76 EPC:
**05733679.4 / 1 620 523**

(71) Applicant: **Capzo International B.V.**
**7631 AK Ootmarsum (NL)**

(72) Inventor: **Reezigt, Herman**
**7631 EH Ootmasum (NL)**

(74) Representative: **Griebling, Onno**
**Octrooibureau Griebling BV,**
**Sportweg 10**
**5037 AC Tilburg (NL)**

Remarks:
This application was filed on 01-10-2010 as a divisional application to the application mentioned under INID code 62.

(54) **Process for producing a heat storage polymer composition containing a heat accumulating phase change material**

(57) A process for the production of a polymer composition comprising a heat accumulating phase change material includes the following steps:

providing a heat accumulating phase change material having a phase change temperature,
wherein the phase change material is a salt hydrate;
providing a first monomer containing a functional group to which the phase change material can be bonded;
providing an aliphatic epoxy acrylate as a second monomer;
mixing the first and second monomers;
heating the blend of first and second monomers;
heating the phase change material so that it melts;
mixing the heated blend of first and second monomers with the melted phase change material;
allowing the first and second monomers to polymerize.

**EP 2 308 943 A2**

**Description**

The invention relates to a process according to claim 1.

US-4209413 discloses a heat storage polymer composition containing a heat accumulating phase change material. This known composition is in the form of a gel in which the particles phase change material are dispersed. This has the drawback that for all practical purposes the composition must be contained in a fully closed container and cannot be used as a mechanically stable, independent, material. Furthermore, the temperature range of the composition is only limited and the methods for preparing it are complex.

The composition according to the invention may be used as additive for a great many of materials. The use thereof in building materials such as concrete, brick and heat resistant construction sheets and construction parts, and polymeric materials such as synthetic tubes offers in particular completely novel advantages for heating and heat storage.

As the composition is both chemically and mechanically stable to high temperatures (70 °C - 180 °C), it is very suitable to be used as additive.

The additive according to the invention exhibits a constant heat emission. Furthermore the additive maintains the typical characteristics of a polymer such as plastic deformation at high temperatures. In addition the composition may also have features such as restricted water-absorptive power, fire-resistant, and very great thermal capacity as well as storage heat capacity.

Because the heat accumulating material is permanently bonded to the first polymerized monomer and the second polymerized monomer or prepolymer keeps its properties during mechanical treatments and high temperature such as 70-180°C, the composition maintains its polymeric characteristics, structure and heat accumulating effect and as a result of this it is extremely useful as additive.

Examples of a first monomer which may be used are: vinylcompounds, polyols or polyalcohols, sulfides and epoxy compounds having a functional group which may be bonded to a heat accumulating phase change material. In particular (meth)acrylic acid and dimethylolpropionic acid as well as salts thereof are useful therefore.

The choice of the second or a third monomer or prepolymer is determined by the desired physical properties which a polymer composition according to the invention should have. An example of a second monomer is an epoxy-acrylate which forms together with the first monomer a thermal stable matrix to which also a phase change material is bonded, either directly or indirectly. A second example is isocyanate which in the presence of polyol may be converted by polymerization into polyurethane which provides a flexible matrix to which at the first monomer a phase change material is bonded. By this the phase change material may be entrapped in closed cells which are bonded to a solid polymeric matrix by a phase in which the phase change material has been assimilated into a gel. A use of the composition is thereby: the application as additive for polyurethane foam which possesses a high storage of heat capacity. These foams may be applied for several purposes such as heat mattresses.

Known phase change materials can be used. It may be a hydrate of an organic or inorganic salt, and especially sodium acetate trihydrate.

In one aspect, the composition is a liquid or a paste in which the above mentioned compositions according to the invention are embedded as solid particles. This liquid or paste is particularly suitable to employ directly as additive for polymers, for instance PVC plastisols. This liquid or paste has as great advantage that the process of grinding has become unnecessary and the particle size of the polymer composition is significantly smaller than the size of the particles from the process of grinding. The particles could have a size even less than 20 $\mu$m. Through this the application of the polymer composition in thin layers is possible.

Known standard methods concerning the production of polymer composition which comprises heat accumulating phase change material in solid form are carried out by having heat accumulating materials to react with or disperse or divide into polymers. Moreover it is known that pores and cells of porous materials like foam comprising heat accumulating materials can be filled by means of vacuum techniques.

It is observed that US-A-4,585,843 discloses a process for preparing a polymeric gel in which one disperses in the reagents a particulate phase change material (for instance sodium acetate trihydrate) which acts as a heat sinking material, taking up part of the reaction heat generated during the process.

Contrary to the invention, by all common production processes a polymer composition is obtained, in which the heat accumulating materials are not or weakly bonded to the regarding polymer, which composition can lose its polymeric properties by decomposition or deforming at which the phase change materials would be released during exposing to high temperatures (70-180°C) or by mechanical treatments.

The invention relates to also production processes in which a mixture of heat accumulating phase change material and monomers is polymerized, so that a polymer composition will be obtained in which the phase change materials are so strongly bonded to the prepared polymer, that the thus obtained composition is stable at high temperature (70-180°C) or mechanical treatments.

According to the invention, a process for the production of a polymer composition comprising a heat accumulating phase change material has the features of claim 1.

The method of preparation according to the invention has the advantage that it can easily be performed and that a polymer composition comprising a heat accumulating phase change material as a solid according to the invention will be gained straightforwardly and fast.

The monomers, prepolymers and phase change materials which may be used for the method of preparation are known compounds. Some examples of these compounds are described in the afore-mentioned preferred embodiments according to the invention. The polymerization is performed by common methods such as radical polymerization and stepwise polymerization. The acrylate monomers may be polymerized by radical polymerization with the help of thermally decomposing radical initiator such as Vazo® 52 (2,2'-azobis(2,4-dimethylvaleronitrile). The stepwise polymerization is for instance an addition reaction between a polyol and an isocyanate, if desired accelerated by a catalyst , such as Dabco® 33-LV. Advantage of the two said methods is that they can be applied under usual conditions and at different temperatures.

The advantage of a polymer composition in the form of an additive and certainly in the form of a liquid or paste, is that this is very simply to use in existing processes. For instance, the polymer composition, which has been in situ polymerized in a plasticizer for instance diisononylftalate or in a polyol for instance Terathane 1000, can be immediately added to the existing coating formulas. In this way the suitability of the polymer composition will not be hindered by complex and economically not achievable techniques, such as vacuum techniques and capsulating of phase change materials.

The phase change materials are in molten state mixed with the blend of acrylate monomers. In this way less water will be used to obtain a homogeneous solution. Hydrates of salt produced by applying a solution of phase change material have a higher content of water of crystals as compared to when molten phase change materials are used. Because these hydrates have a lower melting point than the equivalent hydrates with a lower content of water of crystallization, they are not desired.

So if desired and for obtaining a polymer composition comprising a heat accumulating phase change material, firstly a mixture of the first monomer in the presence of a heat accumulating phase change material will be polymerized according to conventional method, for example into a gel, and subsequently the obtained product is added to at least one of the second monomer or prepolymer after which the obtained product is polymerized by known method. By this method a heat accumulating phase change material may be, for example, firstly bonded to a polymer, after which the polymer with the phase change material is entrapped in a matrix of a second polymer. By these methods of preparation it is important that the phase change materials which are presented in the blend, would be crystallized out. This can be brought about for instance by leaving the acquired blend to cool down or by adding a seed crystal.

For the use of the polymer composition as final product it is favorable that the composition according to the invention is a solid, coherent compound.

Further the claimed exclusive rights comprise a product wherein the polymer composition according to the invention as well as a process for the production of this is used. When the composition is obtained in a solid state, it may be ground and the obtained granulates, grains or powder may be used as additive. When on the other hand the composition is a tender solid state, it is easy to add this to a compound.

In addition to the use with building materials and polymeric materials the products according to the invention could be used in: hot-water containers, plates for keeping food warm, teddy bears, insulators or heaters for engines, industrial installations, thermo packs for medical purposes, shoe soles, gloves, means for thawing, radiators, in particular underfloor heating and insulating materials. So the number of applications of the invention is almost unlimited.

The present invention will be elucidated by means of the following non-limiting examples.

**Example 1**

Below there is described an example of a process for the production of a polymer composition where the polymeric matrix is an acrylate to which sodium acetate trihydrate is bonded. The acrylate matrix comprises an epoxy-acrylate as second monomer. This acrylate matrix has the advantage that it is stable at 180°C and exhibits very little swelling by polar compounds such as water and specific polyols. The product may be ground into fine powder and can as additive right away be applied in polymers and plastics.

***Preparation 1***

1. Mix the monomers, being acrylic acid and an epoxy-acrylate (may also be a different monomer)
1.1 8 grams of acrylic acid with 8 grams of epoxy-acrylate
2. Add glycerol and wetting agent
2.1 0.2 grams of wetting agent and 1 gram of glycerol

3. Neutralize with sodium hydroxide to obtain sodium acrylate

3.1 9 grams of sodium hydroxide (50%)

4. Heat blend of monomers (= product steps 1, 2 and 3) to 70°C

5. Heat sodium acetate trihydrate crystals to 70°C, clear liquid.

6. Mix blend of monomers with molten crystal

6.1 add 73 grams of molten salt hydrate

7. Mix to a homogeneous blend

8. Add initiator and stirr

8.1 add 0.8 grams of initiator, for instance Vazo 52

9. Pour the blend within one minute into a container. After one minute the polymerization will start and a polymer composition will be formed.

Physical properties measured according to measuring method mentioned in example 3

| Physical form | solid |
|---|---|
| Density product | 1150 kg/m$^3$ |
| Density powder | 800 kg/m$^3$ |
| Color | white |
| Heat storage capacity | 2500 Jlkg.K |
| Bulk heat storage capacity* | 150 kJ/kg |
| *=average value over a temperature range from 40°C to 60°C | |

### Example 2.

Below there is described an example of a process for the production of a polymer composition in situ in a plasticizer where the polymeric matrix is an acrylate to which sodium acetate trihydrate is bonded. The acrylate matrix comprises an epoxyacrylate as second monomer. This acrylate matrix has the advantage that it is stable at 180°C and exhibits very little swelling by polar compounds such as water and specific polyols. The final product is a paste with the advantage that grinding is not necessary any more.

### *Preparation 2*

1. Mix the monomers being acrylic acid and an epoxy-acrylate (may also be a different monomer)

1.1 8 grams of acrylic acid with 8 grams of epoxy-acrylate

2. Add glycerol and wetting agent

2.1 0.2 grams of wetting agent and 1 gram of glycerol

3. Neutralize with sodium hydroxide to obtain sodium acrylate

3.19 grams of sodium hydroxide (50%)

4. Heat blend of monomers (= product steps 1, 2 and 3) to 70°C

5. Heat sodium acetate trihydrate crystals to 70°C, clear liquid.

6. Mix blend of monomers with molten crystal.

6.1 add 73 grams of molten salt hydrate

7. Mix to a homogeneous blend

8. Heat plasticizer to 72°C and add 2 % emulsifier

9. Add the homogeneous blend stepwise to the heated plasticizer while stirring

10. Add initiator and stirr

10.1 add 0.8 grams of initiator, for instance Vazo 52

11. Stir the reaction mixture until all of the monomers are polymerized and let the product cool afterwards.

**Example 3**

Below there is described an example of a process for the production of a polymer composition of which the polymeric matrix is a polyurethane foam to which sodium acetate trihydrate is bonded. The invention is to form the foam from the gel in stead of filling a foam with the gel.

***Preparation 3***

1. Mixture A:

1.1 Weigh out 25 grams of concentrate Novi-Acryl gel
1.2 Add 1.7 grams of triethanolamine (for longer gelling 2.5 grams) and stir
1.3 Add 30 grams of glycerol.and stir
1.4 Add 18.3 grams of water
1.5 Mix to a clear solution
1.6 Add 150 grams of molten sodium acetate trihydrate at about 70°C
Mix until a clear solution

2. Mixture B:

2.1 Weigh out 3 grams of ammonium persulfate
2.2 Fill up with water to a total weight of 75 grams

3. Mix mixture A and mixture B together and a thermogel will be produced. Crystallize the thermogel out by leaving it standing for one night.
The crystallization has occurred when the volume of the gel has expanded and the gel is not clear any more but turbid. The crystallizing can be increased by cooling down strongly the crystals so that more stable seeds will be formed as well as the quickness of crystallization will be increased. On the other hand the crystals will be smaller. Mix the thermogel with a wetting agent.
Add a 2 % concentrate of weight Tego Dispers 750 W to the thermogel.
Stir the mixture with high speed (20-25,000 rpm) until a nice uniform gel has been obtained. Be aware that the gel is a polymer which is apt to rise up along the stirrer.
4. Add foam compounds. Add 1.5 grams of Tego Dispers 750W.
5. Add 50 grams of Desmophen 550u.
6. Add 1 gram of Dabco® T-12N.
7. Add 3 grams of pentane.
8. Mix 100 grams of PPG prepolymer comprising 6% NCO terminated TDI groups with 100 grams of Desmodur VL50.
9. Add the isocyanate blend to the mixed gel.
10. Let the product foam until the thermo foam has been formed.

The physical properties of a polymer composition comprising a polyurethane foam as a polymeric matrix to which sodium acetate trihydrate is bonded directly or indirectly by sodium acrylate as the first monomer, are illustrated in the following table and charts:

| | Physical properties measured according | to method below |
|---|---|---|
| | *I* | *II* |
| State | solid | granulate 2-3 mm |
| Density | 800 kg/m$^3$ | 800 kg/m$^3$, bulk density 480 kg/m$^3$ |
| Color | red | red |
| Heat capacity* | 4445 J/kg.K | 3556 J/kg.K |
| Thermal conductivity | 0.13W/m.K | 0.09 W/m.K |
| R value at L=0.1 m | 0.8 m$^2$.K/W | 1.1 m$^2$.K/W |

(continued)

| Color | red | red |
|---|---|---|
| *= average value over a temperature range from 20°C to 80°C | | |

*I*: polyurethane matrix containing sodium acetate trihydrate in a gel of acrylate polymers in a solid state according to the invention
*II*: polyurethane matrix containing sodium acetate trihydrate in a gel of acrylate polymers as a granulate according to the invention

The sample to be measured had been placed in the illustrated sensor, in which in an isolated space the heat absorption of the sample as well as the heat emission of the sensor was measured. The sensor, made of aluminium, has a heat capacity of 910 J/kg.K, a weight of 2,553 kg and the initial temperature was 80°C.

The following formulae will be used here:

$$Q_{absorbed} = Q_{emitted}$$

$$Q_{sensor} = Q_{sample}$$

$$m \times c \times \Delta T = ( m \times \Delta T )$$

$$c_{sample} = (( m_{sensor} \times c_{sensor} \times \Delta T_{sensor} )) \times \frac{1}{( m_{sample} \times \Delta T_{sample} )}$$

See the drawing below for the aluminium sensor:

materiaal Aluminium 1 stuks

Chart concerning heat capacity and absorption of energy in the form of heat in 0.1 kg polyurethane matrix containing acetate trihydrate in a gel of acrylate polymers in solid state and according to the invention.

-□- : heat absorption Q with average heat capacity of 4445 J/kg.K (J)
-x- : heat capacity c [J/K] in relation to temperature
------ : heat capacity c [J/K] in relation to temperature

Chart of heat emission of 0.1 kg solid polyurethane over a period of time which contains sodium acetate trihydrate in a gel of polyacrylate according to the invention.

Compare this with the properties of water, a liquid heaving a heat capacity of 4180 which had, in a comparable test, transferred all its energy in 180 seconds. It is just this property of heat emission in a very slow way, which makes the polymer composition so special which contains a polyurethane matrix having a bonded sodium acetate trihydrate. In plain words the polymer composition remains warm long, so this warmth can be used for a long period because it will not be emitted fast.

## Claims

1.  Process for the production of a polymer composition comprising a heat accumulating phase change material **characterized in that** the process includes the following steps:

providing a heat accumulating phase change material having a phase change temperature,
wherein the phase change material is a salt hydrate;
providing a first monomer containing a functional group to which the phase change material can be bonded;
providing an aliphatic epoxy acrylate as a second monomer;
mixing the first and second monomers;
heating the blend of first and second monomers;
heating the phase change material so that it melts;
mixing the heated blend of first and second monomers with the melted phase change material;
allowing the first and second monomers to polymerize.

2. Process for the production of a polymer composition comprising a heat accumulating phase change material **characterized in that** the process includes the following steps:

providing a heat accumulating phase change material having a phase change temperature,
wherein the phase change material is a salt hydrate;
providing a first monomer containing a functional group to which the phase change material can be bonded;
providing an aliphatic epoxy acrylate as a second monomer;
heating the first monomer;
heating the phase change material so that it melts;
mixing the heated first monomer with the melted phase change material;
allowing the first monomer to polymerize;
subsequently adding the obtained product to the second monomer,
allowing the obtained mixture to polymerize by known method to solid product.

3. Process according to any of the claims 1 to 2 **characterized in that** an auxiliary or additive is applied during the polymerization such as catalyst, initiator, wetting agent, hardening agent, accelerator, seed crystal, blowing agent, water, coloring agent, or aromatic substance.

4. Process according to claim 2,
wherein the first monomer comprises a vinylcompound;
wherein the mixture of the heated first monomer and the melted phase change material is allowed to polymerize into a gel in the presence of a catalyst and water;
wherein subsequently the phase change material is allowed to crystallize;
and wherein subsequently the gel comprising the crystals of the phase change material is mixed with the second monomer and the obtained blend is polymerized to a polymer matrix according to conventional method.

5. Process according to claim 1,
wherein the first monomer is acrylic acid;
wherein a mixture is prepared of the first and second monomers, glycerol and a solution of sodium hydroxide;
wherein, in the presence of a wetting agent, the melted phase change material is added to said mixture;
wherein the obtained blend is stirred to a homogenous solution;
and wherein the homogenous solution is polymerized with the aid of an initiator.

6. Heat accumulating product comprising as an additive a polymer composition obtainable by a process according to any of the claims 1 to 5.

7. Product according to claim 6 wherein the additive has been applied as a granulate or powder.

8. Product according to claim 6 wherein the additive has been applied as a liquid or paste.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4209413 A

- US 4585843 A